# EUROPÄISCHE PATENTSCHRIFT

(11) **EP 1 121 554 B1**
(45) Veröffentlichungstag und Bekanntmachung des Hinweises auf die Patenterteilung: **27.10.2010**
(21) Anmeldenummer: 00958465.7
(22) Anmeldetag: 17.08.2000
(51) Int. Cl.: F16L 25/00

(54) **BEFESTIGUNGSKUPPLUNG FÜR WELLROHRE**
SECURING COUPLING FOR CORRUGATED PIPES
RACCORD DE FIXATION POUR TUBES ONDULES

(30) Priorität: 21.08.1999 DE 29914435 U; 21.08.1999 DE 19939149; 24.09.1999 DE 29916743 U; 24.09.1999 DE 19945751
(43) Veröffentlichungstag der Anmeldung: 08.08.2001
(60) Teilanmeldung: 08012975.2
(73) Patentinhaber: Flexa GmbH & Co. KG, 63456 Hanau/Main (DE)
(72) Erfinder: FIEBER, Dieter, D-63512 Hainburg (DE)
(74) Vertreter: Wagner, Carsten
(86) Internationale Anmeldenummer: PCT/EP2000/008045
(87) Internationale Veröffentlichungsnummer: WO 2001/014780

(56) Entgegenhaltungen:
- EP-A- 0 414 500
- WO-A-98/40656
- DE-U- 9 400 905
- US-A- 4 441 745
- US-A- 5 087 084
- US-A- 5 354 106

## Beschreibung

Die Erfindung betrifft Befestigungskupplungen für Wellrohre.

Seit vielen Jahren sind verschiedenartige Typen an Befestigungskupplungen für Wellrohre bekannt. Eine Vielzahl weisen gefederte Riegel mit elastischen Fingern auf, die mit Vorsprüngen versehen sind, welche in ein Wellental eines Wellrohres eingreifen, um eine Fixierung des Rohres zu bewerkstelligen. Die Finger solcher Kupplungen erleiden beim Einschieben und beim Entfernen des Rohres eine elastische Auslenkung.

In DE 39 03 353 A1 ist eine Anschlußarmatur für umfangsgerippte Rohre oder Schläuche, insbesondere für flexible Wellschläuche, offenbart, mit quer zur Schlauchachse am Umfang umlaufenden Wellen oder dergleichen, wobei die Anschlußarmatur eine das Ende des Wellschlauches in sich aufnehmende Hülse hat und in der Wandung dieser Hülse eine gegen eine Rückstellkraft eines Federbereiches auslenkbare, sich in axialer Richtung der Hülse erstreckenden Zunge mit einem in das Hülseninnere gerichteten Vorsprung zum Eingriff in ein Wellental oder dergleichen des Wellschlauches oder Wellrohres für dessen axiale Festlegung vorgesehen ist, wobei die Anschlußarmatur dadurch gekennzeichnet ist, daß nur eine einzige Zunge vorgesehen ist, deren den Vorsprung aufweisender Bereich in Umfangsrichtung eine große Abmessung hat, und daß die Länge des Vorsprunges in Umfangsrichtung der Hülse wenigstens etwa gleich dem Innenradius der Hülse ist.

In DE 296 13 054 U1 ist ein Rohrverbinder aus Kunststoff offenbart, bestehend aus einem zur Aufnahme eines starren oder biegsamen Rohres (Schlauches) ausgebildeten hülsenförmigen Körper, dessen Mantel wenigstens eine eingeformte Zunge enthält, die durch eine etwa U-förmige Ausnehmung gebildet und um ihre Wurzel federnd bewegbar ist, sowie an ihrem freien Ende ein Sperrglied zum Eingreifen in eine Ausnehmung oder zum Hintergreifen eines Steges eines eingeschobenen Rohres ausgebildet ist, und die Zunge und das Sperrglied im rechten Winkel zur Hülsenachse gerichtet sind.

In EP 0414500 B1 ist eine Kupplung offenbart, bei der ein Fußabschnitt eines Fingers mit dem rohrförmigen Körper der Kupplung über seitliche Lagerelemente verbunden ist, die dafür sorgen, daß der Finger aufgrund elastischer Drehbeanspruchung der Elemente um eine Querachse nachgiebig verschwenkbar ist.

Nachteilig bei all diesen Kupplungen ist die Tatsache, daß die Riegel bzw. Finger entweder zu schwach sind, um die gewellte Leitung entgegen einer starken Auszieh-Kraft in Position zu halten, oder daß sie stark genug sind, die gewellte Leitung zu halten, statt dessen aber die Finger zu steif sind, um der Leitung zu ermöglichen, leicht in den Verbinder eingedrückt zu werden. Darüber hinaus ist es bei der letztgenannten Kupplung nachteilig, daß die Möglichkeit besteht, ohne Werkzeug eine nicht vorgesehene Freigabe des Wellrohres durch versehentliches bzw. bewußt mißbräuchliches Verschwenken eines entsprechenden Fingers zu ermöglichen. Dies ist insbesondere in sicherheitsrelevanten Bereichen ausgesprochen nachteilig.

Aus dem vorgenannten ergibt sich das Problem, mit Hilfe von neuartigen Befestigungskupplungen für Wellrohre die obengenannten Nachteile zumindest teilweise zu beseitigen. Das sich ergebende Problem besteht insbesondere darin, Befestigungskupplungen für Wellrohre bereitzustellen, die eine - insbesondere nur mit Hilfe eines Werkzeuges - auf einfache Art und Weise mögliche Freigabe eines vorher fixierten Wellrohres ermöglichen und ein unbeabsichtigtes Herausrutschen des Wellrohres verhindert wird.

Dieses Problem wird erfindungsgemäß durch Befestigungskupplungen nach Anspruch 1 und durch ein Befestigungskupplungskit nach Anspruch 5 gelöst.

Die erfindungsgemäße Befestigungskupplung für Wellrohre weist eine rohrförmige Hülse mit einem offenen Einführungsende zum Aufnehmen des Wellrohres sowie mindestens eine erste Sicherungszunge auf, die in einer ersten Ausnehmung in der Umfangswand der Hülse beweglich angeordnet ist, wobei die Hülse mindestens einen Sperrvorsprung für den Eingriff in eine Umfangsrille des Wellrohres trägt. Die Sicherungszunge ist bezüglich der Hülse über mindestens ein Befestigungselement an der Hülse verbunden derart radial in federnder Weise verschiebbar, daß der Sperrvorsprung in eine Freigabestellung außer Eingriff mit der Rille des Wellrohres bringbar ist.

Die Befestigungskupplung weist mindestens eine in einer weiteren Ausnehmung in der Umfangswand der Hülse radial beweglich angeordnete weitere Sicherungszunge auf, wobei diese bezüglich der Hülse über mindestens ein weiteres Befestigungselement angebunden ist. Sämtliche Befestigungselemente sind stegförmig ausgebildet, während sämtliche Sicherungszungen in von den Sperrvorsprüngen wegweisender Richtung konisch-verjüngend ausgebildet sind.

Mindestens eine Sicherungszunge ist über mindestens einen in Ruhestellung gewölbten Verbindungssteg mit der Hülse in radialer Richtung begrenzend verschwenkbar verbunden, um ein ggf. zu weites radiales Verschwenken bei zu starker Materialbeanspruchung zu vermeiden.

Ein großer Vorteil der erfindungsgemäßen Befestigungskupplung ist die Tatsache, daß diese im Vergleich zu Ausführungsformen mit Filmscharnier bei vergleichbaren Stabilitäten ausgesprochen geringe Wandstärken aufweisen, so daß bei einer entsprechenden Massenproduktion die Herstellungskosten stark gesenkt werden können.

Bei der Befestigungskupplung ist es vorteilhaft, wenn diese mindestens drei insbesondere vier Sicherungszungen aufweist, da somit eine relativ hohe Eingriffsredundanz gewährleistet wird, die bei Versagen einer einzelnen Sicherungszunge zum Tragen kommt, da die restlichen Sicherungszungen in der Regel nach wie vor eingreifen und eine unkontrollierte Freigabe verhindern.

Weiterhin ist es bei der Befestigungskupplung von Vorteil, wenn mindestens eine Sicherungszunge mindestens eine beispielsweise ovalförmige Ausnehmung aufweist, da dies eine Material- und folglich auch eine Kostenersparnis bei der Herstellung der Befestigungskupplung darstellt.

Das erfindungsgemäße Befestigungskupplungskit besteht aus einer Befestigungskupplung und einem Demontage-Werkzeug, wobei das Demontage- Werkzeug bei der Demontage schlauchumgreifend in längsachsialer Richtung zwischen Wellrohr und Befestigungskupplung schiebbar ist und zwei zusammensetzbare Halbschalen oder zwei über mindestens ein scharnierähnliches Verbindungselement verschwenkbare Halbschalen aufweist.

Bei der Demontage werden die mindestens zwei Sicherungszungen durch das schlauchumgreifende Einschieben in längsachsialer Richtung zwischen Wellrohr und Befestigungskupplung in radialer Richtung außer Eingriff gebracht, so daß das Wellrohr aus der Befestigungskupplung herausgezogen werden kann.

Mindestens eine Halbschale weist mindestens eine radial verschwenkbare Sicherungszunge auf, da nach dem Umgreifen des Wellrohres mit dem Demontage-Werkzeug und Einschieben zwischen Wellrohr und Hefestigungskupplung bei Bedarf die radial verschwenkbare Sicherungszunge vorzugsweise mittels einer an der Außenoberfläche einer Halbschale plazierten Schalterfläche in Eingriff eines Wellentales des Wellrohres gebracht und das Wellrohr aus der Befestigungskupplung herausgezogen wird. Diese Art der Demontage ist besonders bei sehr weichen Schläuchen vorteilhaft, da diese mechanisch nur ausgesprochen gering belastet werden.

Die erfindungsgemäße Befestigungskupplung als auch das Demontage-Werkzeug können aus unterschiedlichen Materialien und Materialzusammensetzungen bestehen, beispielsweise aus Polyethylen, Polyimid etc. und darüber hinaus entsprechend den spezifischen Montageanforderungen in unterschiedlichen Formen bezüglich der Hülse beispielsweise in Form von Winkelstücken, geraden Stücken, mit oder ohne Flansche etc., ausgebildet sein.

Nachfolgend werden zwei Ausführungsbeispiele der Erfindung anhand mehrerer Zeichnungen erläutert. In den Zeichnungen zeigen:
- Figur 1 -: eine Längsansicht einer Ausgestaltung der erfindungsgemäßen Befestigungskupp- lung;
- Figur 2 -: eine Längsansicht einer weiteren Ausge- staltung der erfindungsgemäßen Befesti- gungskupplung;
- Figur 3 -: eine radiale Queransicht der in Figur 1 dargestellten Befestigungskupplung;
- Figur 4 -: eine Längsansicht einer Ausgestaltung eines Demontage-Werkzeuges;
- Figur 5 -: eine radiale Queransicht des in Figur 4 dargestellten Demontage-Werkzeuges.

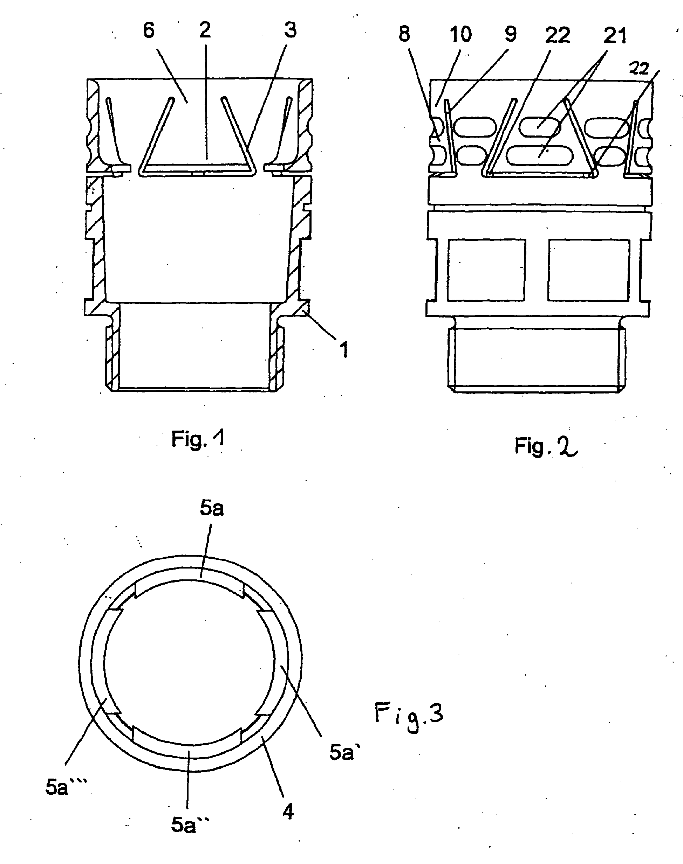

Figuren 1 und 2 zeigen jeweils eine Längsansicht einer Ausgestaltung der erfindungsgemäßen Befestigungskupplung. Dort sind über jeweils als Steg ausgebildete Befestigungselemente 6,10 in Ausnehmungen 3,9 radial in federnder Weise Sicherungszungen 2,8 mit der Hülse 1 verbunden. Die Sicherungszungen 2 weisen in der in Figur 2 dargestellten Ausführung jeweils zwei ellipsenförmige Ausnehmungen 21 auf. In Figur 3 sind in der radialen Queransicht vier Sperrvorsprünge 5a, 5 a' 5a", 5a"' für den Eingriff in eine Umfangsrille (Wellental) des Wellrohres vorgesehen,. In Figur 2 sind in Ruhestellung gewölbte Verbindungsstege 22 zu erkennen, die ein zu weites radiales Verschwenken begrenzend verhindern.

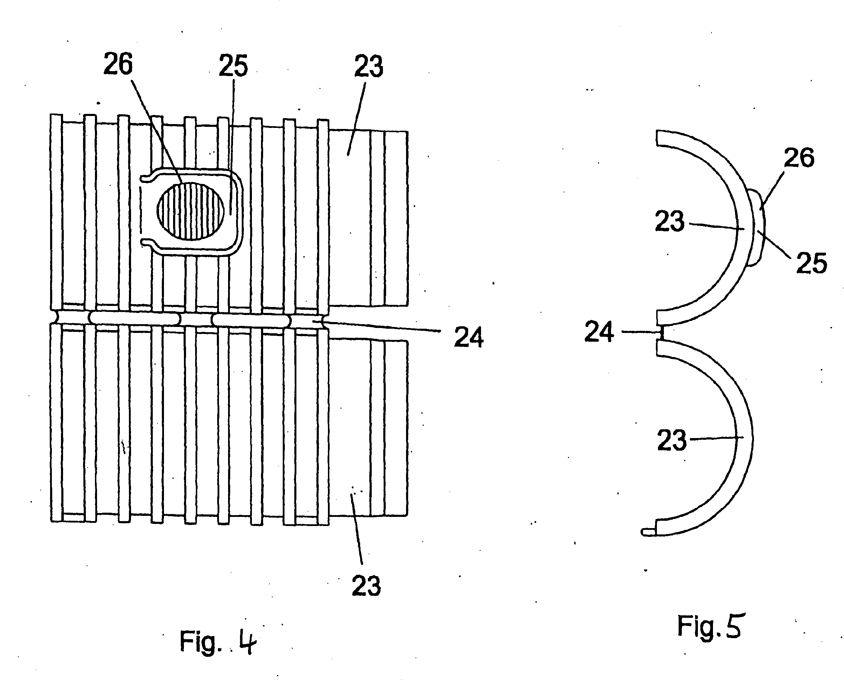

In Figur 4 ist eine Längsansicht und in Figur 5 eine radiale Queransicht einer Ausgestaltung eines Demontage-Werkzeuges dargestellt. Das Demontage-Werkzeug setzt sich aus zwei über drei scharnierähnliche stegförmige Verbindungselemente 24 verbundene Halbschalen 23 zusammen, wobei eine Halbschale 23 eine (nicht direkt dargestellte) Sicherungszunge 25 aufweist, die mittels einer an der Außenoberfläche einer Halbschale 23 plazierten Schalterfläche 26 durch leichtes Eindrücken in Eingriff eines Wellentales des Wellrohres gebracht wird.

## Patentansprüche

1. Befestigungskupplung für Wellrohre, mit einer rohrförmigen Hülse (1), die ein offenes Einführungsende zum Aufnehmen des Wellrohres aufweist, und mindestens einer ersten Sicherungszunge (2), die in einer ersten Ausnehmung (3) in der Umfangswand (4) der Hülse (1) beweglich angeordnet ist, und mindestens einen Sperrvorsprung (5a,5a') für den Eingriff in eine Umfangsrille des Wellrohres trägt, wobei die Sicherungszunge (2) bezüglich der Hülse (1) über mindestens ein Befestigungselement (6) an der Hülse (1) verbunden radial in federnder Weise verschiebbar ist, daß der Sperrvorsprung (5a,5a') in eine Freigabestellung außer Eingriff mit der Rille des Wellrohres bringbar ist, **dadurch gekennzeichnet, daß**
- die Befestigungskupplung mindestens eine in einer weiteren Ausnehmung (9) in der Umfangswand (4) der Hülse (1) radial beweglich angeordnete weitere Sicherungszunge (8) aufweist, wobei die weitere Sicherungszunge (8) bezüglich der Hülse (1) über mindestens ein weiteres Befestigungselement (10) angebunden ist, wobei sämtliche Befestigungselemente stegförmig ausgebildet und sämtliche Sicherungszungen in von den Sperrvorsprüngen wegweisender Richtung konisch-verjüngend ausgebildet sind, wobei mindestens eine Sicherungszunge über mindestens einen in Ruhestellung gewölbten Verbindungssteg (22) mit der Hülse (1) in radialer Richtung begrenzend verschwenkbar verbunden ist.

2. Befestigungskupplung nach Anspruch 1, **dadurch gekennzeichnet, daß** diese mindestens drei Sicherungszungen aufweist.

3. Befestigungskupplung nach einem der Ansprüche 1 bis 2, **dadurch gekennzeichnet, daß** diese mindestens vier Sicherungszungen aufweist.

4. Befestigungskupplung nach einem der Ansprüche 1 bis 3, **dadurch gekennzeichnet, daß** mindestens eine Sicherungszunge mindestens eine Ausnehmung (21) aufweist.

5. Befestigungskupplungskit, bestehend aus einer Befestigungskupplung nach einem der Ansprüche 1 bis 4 und einem Demontage-Werkzeug, wobei das Demontage-Werkzeug bei der Demontage schlauchumgreifend in längsachsialer Richtung zwischen Wellrohr und Befestigungskupplung schiebbar ist und zwei zusammensetzbare Halbschalen (23) oder zwei über mindestens ein scharnierähnliches Verbindungselement (24) verschwenkbare Halbschalen (23) aufweist, wobei mindestens eine Halbschale (23) mindestens eine radial verschwenkbare Sicherungszunge (25) aufweist.

## Claims

1. Securing coupling for corrugated pipes comprising a tubular sleeve (1), which comprises an open insertion end for mounting the corrugated pipe, and at least one first securing tongue (2), which is arranged to be movable in a first recess (3) in the peripheral wall (4) of the sleeve (1), and at least one locking projection (5a, 5a') for engaging in a peripheral groove of the corrugated pipe, wherein the securing tongue (2) is displaceable radially in a resilient manner relative to the sleeve (1) by means of at least one securing element (6) connected to the sleeve (1), wherein the locking projection (5a, 5a') can be moved into a release position out of engagement with the groove of the corrugated pipe, **characterised in that**
- the securing coupling comprises at least one further securing tongue (8) arranged radially moveably in a further recess (9) in the peripheral wall (4) of the sleeve (1), wherein the additional securing tongue (8) is connected relative to the sleeve (1) by at least one additional securing element (10), wherein all securing elements are designed to be web-like and all securing tongues are designed to taper conically in a direction pointing away from the locking projections, wherein at least one securing tongue is connected to the sleeve (1) to be pivotable to a limited degree in radial direction by means of at least one connecting web (22), which is arched in a position of rest.

2. Securing coupling according to claim 1, **characterised in that** the latter comprises at least three securing tongues.

3. Securing coupling according to one of claims 1 to 2, **characterised in that** the latter comprises at least four securing tongues.

4. Securing coupling according to one of claims 1 to 3, **characterised in that** at least one securing tongue has at least one recess (21).

5. Securing coupling kit consisting of a securing coupling according to one of claims 1 to 4 and a disconnecting tool, wherein the disconnecting tool during the disconnection can be pushed so as to grip around the tube in longitudinal axial direction between the corrugated pipe and securing coupling, and comprises two connectable half shells (23) or two half shells (23) pivotable by means of at least one hinge-like connecting element (24), wherein at least one half shell (23) comprises at least one radially pivotable securing tongue (25).

## Revendications

1. Raccord de fixation pour tubes ondulés, comportant un manchon (1) tubulaire, qui est muni d'une extrémité d'admission ouverte, destinée à recevoir le tube ondulé, et comportant au moins une première patte d'arrêt (2), qui est agencée mobile dans un premier évidement (3) dans la paroi périphérique (4) du manchon (1) et qui porte au moins une saillie de blocage (5a, 5a') destinée à s'engager dans une rainure périphérique du tube ondulé, sachant que la patte d'arrêt (2), reliée radialement par au moins un élément de fixation (6) sur le manchon (1), est mobile en translation à la manière d'un ressort par rapport au manchon (1), de telle sorte que la saillie de blocage (5a, 5a') peut être amenée dans une position de déblocage non engagée dans la rainure du tube ondulé, **caractérisé en ce que**
- le raccord de fixation comporte au moins une patte d'arrêt (8) supplémentaire, agencée de manière mobile radialement dans un autre évidement (9) dans la paroi périphérique (4) du manchon (1), ladite patte d'arrêt (8) supplémentaire étant attachée par rapport au manchon (1) par au moins un élément de fixation (10) supplémentaire, tous les éléments de fixation étant réalisés sous la forme de barrettes, et toutes les pattes d'arrêt étant réalisées en se rétrécissant en forme de cône dans la direction s'éloignant des saillies de blocage,
- au moins une patte d'arrêt étant reliée au manchon (1), pour pouvoir pivoter de manière limitée dans la direction radiale par l'intermédiaire d'au moins une barrette de jonction (22) cintrée en position de repos.

2. Raccord de fixation selon la revendication 1, **caractérisé en ce que** celui-ci comporte au moins trois pattes d'arrêt.

3. Raccord de fixation selon l'une quelconque des revendications 1 à 2, **caractérisé en ce que** celui-ci comporte au moins quatre pattes d'arrêt.

4. Raccord de fixation selon l'une quelconque des revendications 1 à 3, **caractérisé en ce qu'**au moins une patte d'arrêt comporte au moins un évidement (21).

5. Ensemble de raccord de fixation, formé par un raccord de fixation selon l'une quelconque des revendications 1 à 4 et un outil de démontage, sachant que l'outil de démontage, au moment du démontage, enserre le tube et peut coulisser dans la direction longitudinale axiale entre le tube ondulé et le raccord de fixation, et comporte deux demi-coques (23) aptes à être assemblées ou deux demi-coques (23) aptes à pivoter par l'intermédiaire d'au moins un élément de jonction (24) du type charnière, sachant qu'au moins une demi-coque (23) comporte au moins une patte d'arrêt (25) apte à pivoter radialement.
